# EUROPEAN PATENT APPLICATION

(11) **EP 2 960 792 A2**
(43) Date of publication of application: **30.12.2015**
(21) Application number: 15165948.9
(22) Date of filing: 30.04.2015
(51) Int. Cl.: G06F 9/54

(54) **ELECTRONIC DEVICE AND DATA COPY METHOD BETWEEN ELECTRONIC DEVICES**

(30) Priority: 28.05.2014 US 201462004138 P; 10.09.2014 TW 103131193
(71) Applicant: Acer Incorporated, New Taipei City 221 (TW)
(72) Inventor: Chang, Kai-Ping, Taiwan, ROC New Taipei City 221, (TW); Hsu, Wen-Cheng, Taiwan, ROC New Taipei City 221, (TW); Chang, Cheng-Hsin, Taiwan, ROC New Taipei City 221, (TW); Chang, Hao-Ting, Taiwan, ROC New Taipei City 221, (TW); Wang, Wei-Tsun, Taiwan, ROC New Taipei City 221, (TW); Chang, Wen-Ping, Taiwan, ROC New Taipei City 221, (TW); Wang, Po-Hsiang, Taiwan, ROC New Taipei City 221, (TW)
(74) Representative: Chamberlain, Alan James

(57) **Abstract**

An electronic device and a method for data copy between electronic devices are provided, and the method includes following steps. Data is added to a clipboard of an electronic device. It is determined whether the electronic device is connected to a network associated to a network unit, so as to determine to use the network unit or a wireless transmission unit to transmit the data. If the electronic device is not connected to the network, the data is directly transmitted to another electronic device by the wireless transmission unit, such that the data is added to another clipboard of another electronic device. If the electronic device is connected to the network, the data is indirectly transmitted to the another electronic device by the network unit via a sever in the network, such that the data is added to the another clipboard of the another electronic device.

## Description

### BACKGROUND

### Technical Field

The invention relates to an electronic device, and particularly relates to a data copy method between electronic devices and an electronic device using the method.

### Related Art

Along with quick development of information and communication technology, and along with development of various electronic devices and progress of various functions thereof, the electronic devices are indispensable in people's daily life. In the modem society, almost everyone owns an electronic device of different types such as a notebook computer, a smart phone, a mobile Internet accessing device or a tablet PC, etc., and it is also very common that a single user owns a plurality of electronic devices. Therefore, an application of copying data stored in one electronic device to another electronic device for further usage is very popular, and data share and data copy between the electronic devices may create many practical and convenient applications. How to implement data copy and data paste between the electronic devices through an intuitive and convenient operation is an important issue required to be discussed.

In a current application about copying and pasting data between the electronic devices, the application situation thereof is limited by performance of a network of the two electronic devices. For example, once the phenomenon of network disconnection or connection interrupt occurs, the data cutting and pasting application between the electronic devices will not be executed normally, and data copy between the electronic devices cannot be implemented. In brief, in the application situation with an unstable network condition, the conventional data share and copy function cannot provide an actual help or actual convenience to the user. Moreover, regarding the user operation procedures to performance data copying and data pasting and a specific application environment, if the user can immediately and quickly copy and paste the data to the other electronic device and then directly use and edit the data, it is a great convenience for the user, and can save a plenty of operation time.

### SUMMARY

Accordingly, the invention is directed to an electronic device and a data copy method between electronic devices, by which an adverse effect on data copy between electronic devices caused by network environment is mitigated, so as to improve usage convenience and practicability of data copy between the electronic devices.

The invention provides a data copy method between electronic devices, which is adapted to an electronic device, where the electronic device includes a network unit and a wireless transmission unit, and the data copy method between electronic devices includes following steps. Data is added to a clipboard of the electronic device. It is determined whether the electronic device is connected to a network associated to the network unit, so as to determine to use the network unit or the wireless transmission unit to transmit the data. If the electronic device is not connected to the network, the data is directly transmitted to another electronic device through the wireless transmission unit, such that the data is added to another clipboard of the another electronic device. If the electronic device is connected to the network, the data is indirectly transmitted to the another electronic device through the network unit via a sever in the network, such that the data is added to the another clipboard of the another electronic device.

According to another aspect, the invention provides an electronic device including a network unit, a wireless transmission unit, a storage unit storing a plurality of modules, and at least one processing unit. The at least one processing unit is coupled to the network unit, the wireless transmission unit and the storage unit for accessing and executing the modules stored in the storage unit. The modules include a data copy module, a transmission path selection module, a first transmission module and a second transmission module. The data copy module is configured to add data to a clipboard of the electronic device. The transmission path selection module determines whether the electronic device is connected to a network associated to the network unit, so as to determine to use the network unit or the wireless transmission unit to transmit the data. If the electronic device is not connected to the network, the first transmission module directly transmits the data to another electronic device through the wireless transmission unit, such that the data is added to another clipboard of the another electronic device. If the electronic device is connected to the network, the second transmission module indirectly transmits the data to the another electronic device through the network unit via a sever in the network, such that the data is added to the another clipboard of the another electronic device.

According to the above descriptions, in the electronic device and the data copy method between electronic devices of the invention, the electronic device determines to use the network unit or the wireless transmission unit to transmit data according to whether the electronic device is connected to the network. If the electronic device is not connected to the network, the electronic device directly transmits the data through the wireless transmission unit. Comparatively, if the electronic device is connected to the network, the electronic device indirectly transmits the data through the network unit via the sever in the network. Since the electronic device selects the data transmission device according to a network environment, the application situation of data copy is not limited by the network environment, by which usage convenience of the electronic device is improved.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block diagram of an electronic device according to an embodiment of the invention.
FIG. 2 is a flowchart illustrating a data copy method between electronic devices according to an embodiment of the invention.
FIG. 3 is a schematic diagram of an inter-device data copy system according to an embodiment of the invention.
FIG. 4 is a flowchart illustrating a data copy method of a data transmitting end according to an embodiment of the invention.
FIG. 5 is a flowchart illustrating a data copy method of a data receiving end according to an embodiment of the invention.

### DETAILED DESCRIPTION OF DISCLOSED EMBODIMENTS

Generally, except for including a network unit capable of connecting the Internet, an electronic device further includes other types of hardware devices having other functions. In the invention, data transmission capability of the hardware devices are effectively used, and in case that the network unit cannot be used or in an operation environment of poor network connection quality, other hardware devices are used to assist data copy and transmission of the electronic device, such that two electronic devices can execute a data copy operation and a data paste operation in real-time. Moreover, a cloud server in a network is used as a medium device for transferring data, such that the server transfers the data to another electronic device corresponding to a same account. In this way, practicality and convenience of copying data to another electronic device are improved. In order to fully convey the sprit of the invention, embodiments are provided below for descriptions.

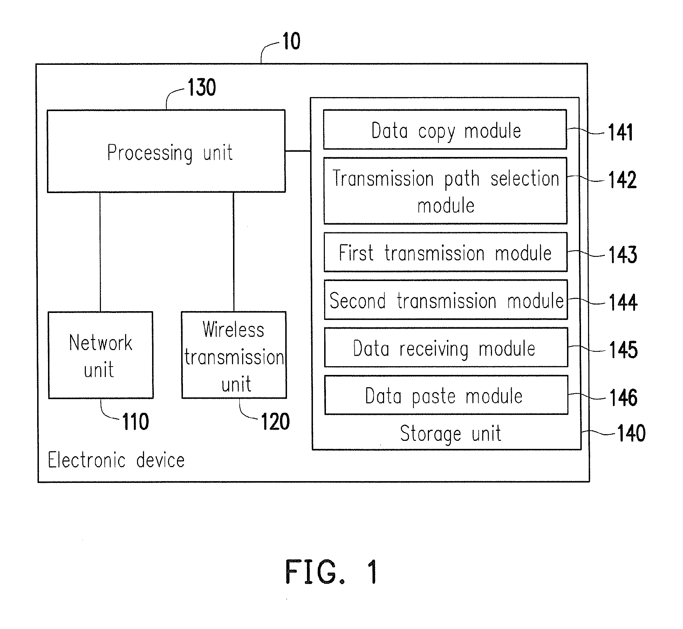

FIG. 1 is a block diagram of an electronic device according to an embodiment of the invention. Referring to FIG. 1, the electronic device 10 of the present embodiment is, for example, a mobile phone, a smart phone, a personal digital assistant (PDA), a tablet PC, an e-book, a game machine or a notebook computer, etc., that is capable of storing various files and data, though the invention is not limited thereto. The electronic device 10 includes a network unit 110, a wireless transmission unit 120, one or a plurality of processing units (only one processing unit 130 is illustrated, though the invention is not limited thereto) and a storage unit 140, and functions thereof are as follows.

The network unit 110 provides a connection function for network communication, such that the electronic device 10 can be connected to an external network, and implement data transmission and communication with other electronic devices via the external network. In the present embodiment, a network associated to the network unit 110 can be a wireless or wired communication network, such as the cable Internet, worldwide interoperability for microwave access (WiMAX), a third generation communication (3G) network, a fourth generation communication (4G) network, an ultra wideband (UWB) network, etc. In other words, the network unit 110 can be a device used for accessing different networks or corresponding to different network protocols. For example, the network unit 110 can be an Ethernet network card, or a 3G wireless communication network module, which is not limited by the invention.

The wireless transmission unit 120 is used for providing a wireless short distance data transmission function, such that the electronic device 10 can directly perform data transmission or communicate with another nearby electronic device through the wireless transmission unit 120. It should be noticed that a signal transmission range of the wireless transmission unit 120 is determined by a hardware type thereof or a signal transmission method. In detail, the wireless transmission unit 120 can establish a proximity-based wireless connection to transmit data, where the wireless transmission data 120 has a corresponding signal transmission range according to a proximity-based wireless communication protocol thereof and the signal transmission specification. The wireless transmission unit 120 capable of establishing the proximity-based wireless connection can be a device supporting a bluetooth communication technique, or a device supporting a near field communication (NFC) communication technique or a device supporting other proximity-based wireless communication techniques, which is not limited by the invention.

Besides, the wireless transmission unit 120 can also be a device supporting an infrared transmission technique, and transmit data with another electronic device through an infrared ray. The wireless transmission unit 120 can also be a combination of a signal output device and a signal receiving device on the electronic device 10. In an embodiment, the wireless transmission unit 120 is, for example, a combination of a speaker used for outputting sound signals and microphone used for receiving the sound signals.

The storage unit 140 is, for example, a fixed or movable random access memory (RAM) of any type, a read-only memory (ROM), a flash memory, a hard disk or other similar devices or a combination of the devices, which is used for recording a plurality of modules and various applications executed by the processing unit 130.

The processing unit 130 is, for example, a central processing unit (CPU) composed or a single core or a plurality of cores, or other programmable general purpose or special purpose microprocessor, a digital signal processor (DSP), a programmable controller, an application specific integrated circuits (ASIC), a programmable logic device (PLD) or other similar devices, or a combination of the devices. The processing unit 130 is coupled to the network unit 110, the wireless transmission unit 120 and the storage unit 140, and can access and execute the modules and various applications stored in the storage unit 140.

Moreover, the electronic device 10 may further include a display device (not shown), other storage device (not shown), a power supply device (not shown) or a signal input device (not shown), etc. For example, the display device can be a touch liquid crystal display panel; the power supply device may include a battery. The signal input device is used for receiving an input signal. For example, the signal input device may include physical keys configured on the electronic device 10 and various external signal input devices.

In the present embodiment, the modules stored in the storage unit 140 at least include a data copy module 141, a transmission path selection module 142, a first transmission module 143, a second transmission module 144, a data receiving module 145 and a data paste module 146. The above modules are, for example, computer programs, procedures or instructions, which can be loaded into the processing unit 130 to execute a function of copying data of the electronic device 10 to another electronic device. Embodiments are provided below to describe detailed steps of data copy method between electronic devices executed by the electronic device 10.

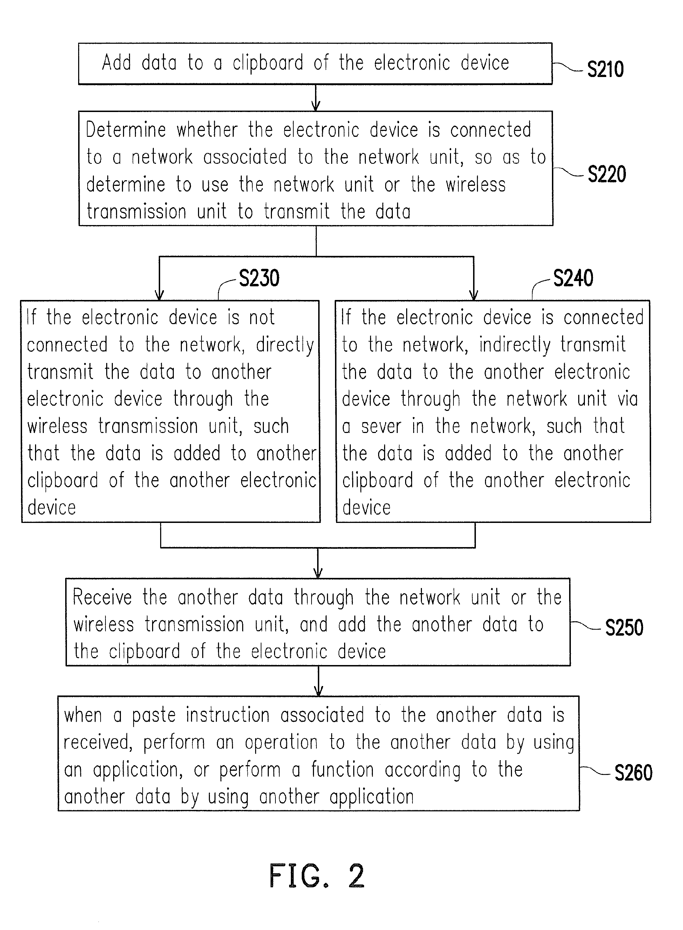

FIG. 2 is a flowchart illustrating a data copy method between electronic devices according to an embodiment of the invention. Referring to FIG. 2, the method of the present embodiment is adapted to the electronic device of FIG. 1, and detailed steps of the data copy method between electronic devices of the invention are described below with reference of various components in the electronic device 10.

First, in step S210, the data copy module 141 is configured to add data to a clipboard of the electronic device 10. In the present embodiment, the clipboard can be a register used for temporarily store data or file copied (or cut and paste) by the user of the electronic device 10, and the clipboard is, for example, a system clipboard in an operating system (OS) of the electronic device 10 or an additionally designed specific clipboard, which is not limited by the invention. The aforementioned data can be a plain text, a hyper text markup language (HTML) file, audio data, an image or data of other file types, etc., which is not limited by the invention.

Then, in step S220, the transmission path selection module 142 determines whether the electronic device 10 is connected to a network associated to the network unit 110, so as to determine to use the network unit 110 or the wireless transmission unit 120 to transmit the data added to the clipboard. In brief, the electronic device 10 selects a transmission component and a dada transmission path for transmitting the data according to a network connection status of the network unit 110.

In step S230, if the electronic device 10 is not connected to the network, the first transmission module 143 directly transmits the data to another electronic device through the wireless transmission unit 120, such that the data is added to another clipboard of the another electronic device. On the other hand, in step S240, if the electronic device is connected to the network, the second transmission module 144 indirectly transmits the data to the another electronic device through the network unit 140 via a sever in the network, such that the data is added to the another clipboard of the another electronic device.

By performing the above steps S210-S240, the electronic device 10 can copy the data stored in the electronic device 10 to the another electronic device. Correspondingly, the electronic device 10 can also receive another data copied and transmitted from the another electronic device, and adds the another data transmitted from the another electronic device in the clipboard of the electronic device 10. In this way, the electronic device 10 can execute a specific operation or edition to the another data in the clipboard.

In this way, in the present embodiment, in step S250, the data receiving module 145 receives the another data through the network unit 110 or the wireless transmission unit 120, and adds the another data to the clipboard of the electronic device 10. In detail, the data receiving module 145 can keep listening and detecting an external signal through the network unit 110 or the wireless transmission unit 120, so as to learn whether data is to be added to the clipboard of the electronic device 10. Therefore, when the another electronic device transmits the another data through a network unit, the data receiving module 145 receives the another data through the network unit 110. When the another electronic device transmits the another data through a wireless transmission unit, the data receiving module 145 receives the another data through the wireless transmission unit 120.

In step S260, when the data paste module 146 receives a paste instruction associated to the another data, the data paste module 146 performs an operation to the another data by using an application, or performs a function according to the another data by using another application. In detail, in the present embodiment, the storage unit 140 stores at least one application program, where the application programs can be loaded into the processing unit 130 and executed by the same to provide corresponding functions. Therefore, the electronic device 10 can execute a paste operation to the another data automatically or according to the paste instruction, such that the application can execute a specific operation on the pasted another data, or the application can provide a specific function according to the pasted another data.

For example, the application programs can be a browser application used for browsing webpages, an image edition application used for editing images, a file edition application used for editing text files, or other applications with various functions. The types of the application programs are not limited by the invention, and the application programs can be downloaded and installed by the user through the network or can be originally built in the electronic device 10 by a device manufacturer. Therefore, the data paste module 146 can execute an edition operation to the image data copied and transmitted by the another electronic device by using the image edition application. The data paste module 146 can also provide a function for browsing a specific webpage according to text data copied and transmitted by the another electronic device by using the browser application.

It should be noticed that implementation of the invention is not limited to the above description, and the content of the above embodiment can be suitably modified according to an actual requirement. For example, the electronic device may have a plurality of hardware devices that can be used as the wireless transmission unit. Moreover, in order to clearly describe how the data to be copied is transmitted to another electronic device through different data transmission devices, an embodiment is provided below to describe detailed steps of the data copy method between electronic devices.

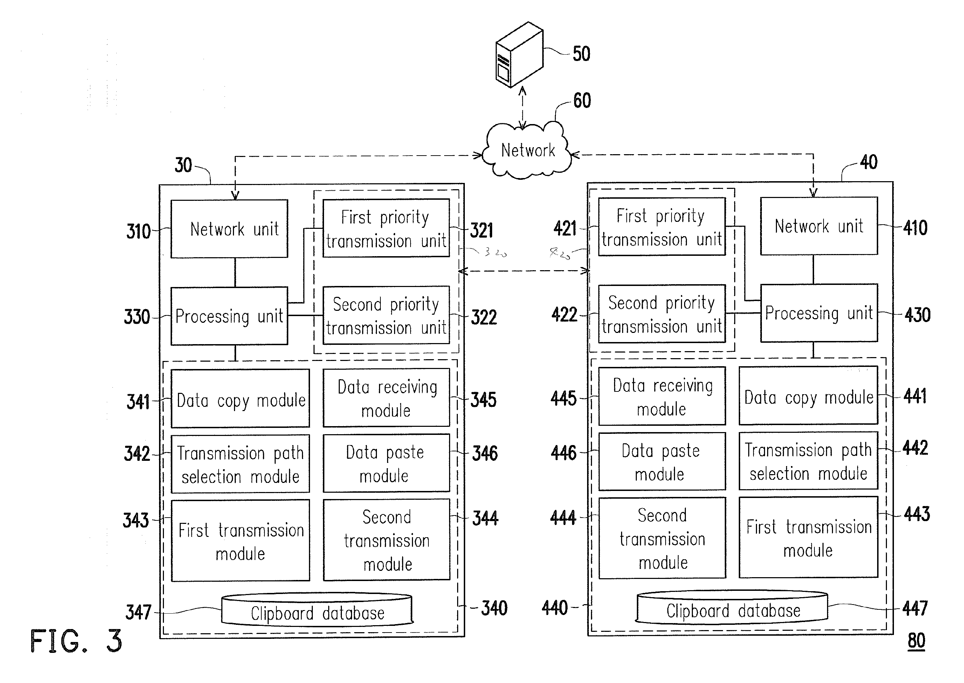

FIG. 3 is a schematic diagram of an inter-device data copy system according to an embodiment of the invention. Referring to FIG. 3, the inter-device data copy system 80 includes an electronic device 30, an electronic device 40 and a server 50. Through a network 60, the electronic device 30, the electronic device 40 and the server 50 can communicate with each other. In the present embodiment, the electronic device 30 and the electronic device 40 can be devices of the same type or different types, which is not limited by the invention. For example, the electronic device 30 and the electronic device 40 can be table PCs. Alternatively, in an embodiment, the electronic device 30 can be a smart phone, and the electronic device 40 can be a notebook computer.

The electronic device 30 includes a network unit 310, a processing unit 330 and a storage unit 340. The storage unit 340 stores a data copy module 341, a transmission path selection module 342, a first transmission module 343, a second transmission module 344, a data receiving module 345 and a data paste module 346. Coupling relationships and functions of the devices and the modules in the electronic module 30 are the same or similar to that of the network unit 110, the processing unit 130, the storage unit 140, the data copy module 141, the transmission path selection module 142, the first transmission module 143, the second transmission module 144, the data receiving module 145 and the data paste module 146 of the embodiment of FIG. 1, and details thereof are not repeated.

Different to the aforementioned embodiment, the electronic device 30 of the present embodiment includes a first priority transmission unit 321 and a second priority transmission unit 322 serving as the wireless transmission unit, and the storage unit 340 has a clipboard database 347 used for storing various data and files. In the present embodiment, the first priority transmission unit 321 and the second priority transmission unit 322 can be data transmission interfaces having different hardware structures and different signal transmission methods. For example, the first priority transmission unit 321 and the second priority transmission unit 322 are different to each other, and the first priority transmission unit 321 and the second priority transmission unit 322 can be respectively a short distance data transmission device such as a bluetooth communication module, a NFC communication module, an infrared transmission module or a combination of microphone and speaker, etc. In order to clearly describe the present embodiment, in the following description, the first priority transmission unit 321 is the bluetooth communication module, and the second priority transmission unit 322 is the combination of microphone and speaker, though the invention is not limited thereto.

Moreover, the electronic device 40 includes a network unit 410, a first priority transmission unit 421, a second priority transmission unit 422, a processing unit 430 and a storage unit 440. The storage unit 440 stores a data copy module 441, a transmission path selection module 442, a first transmission module 443, a second transmission module 444, a data receiving module 445 and a data paste module 446. Coupling relationships and functions of the devices and the modules in the electronic module 40 are the same or similar to that of the network unit 310, the first priority transmission device 321, the second priority transmission device 322, the processing unit 330, the storage unit 340, the data copy module 341, the transmission path selection module 342, the first transmission module 343, the second transmission module 344, the data receiving module 345 and the data paste module 346 of the electronic device 30, and details thereof are not repeated.

The server 50 includes a cloud service platform, which provides different cloud service functions to the electronic device 30 and the electronic device 40. The electronic device 30 and the electronic device 40 can log in the cloud service platform according to specific account information, and the cloud service platform can identify the electronic device 30 and the electronic device 40 and provide specific cloud services to the electronic device 30 and the electronic device 40. For example, the server 50 can serve as a cloud storage device, and the electronic device 30 and the electronic device 40 can back-up and store important data to the remote server 50. Detailed steps of a data copy method between electronic devices executed by the electronic device 30 and the electronic device 40 are described below.

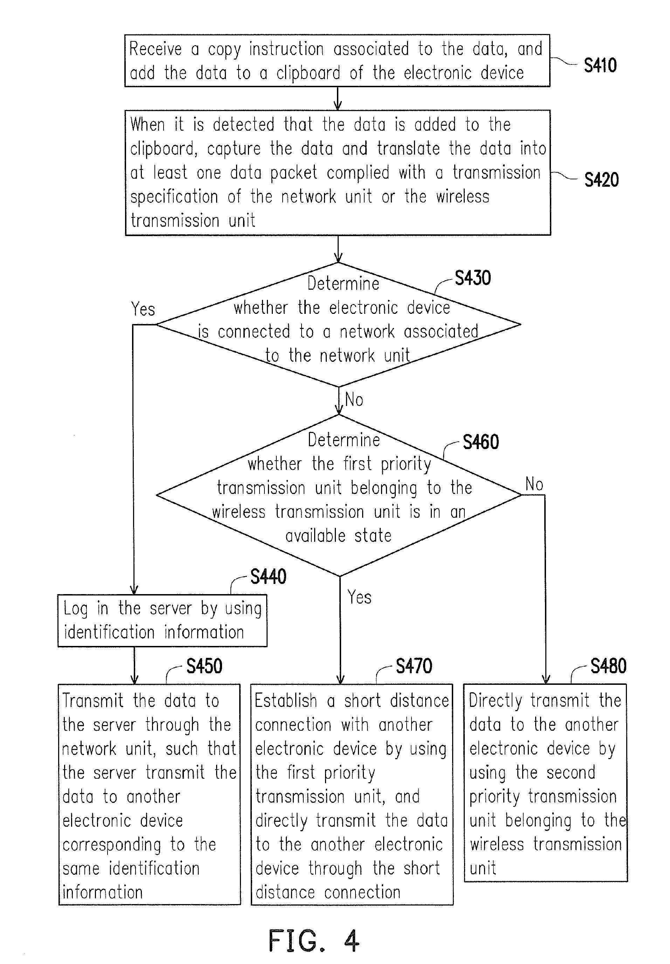

FIG. 4 is a flowchart illustrating a data copy method of a data transmitting end according to an embodiment of the invention. Referring to FIG. 3 and FIG. 4, the method of the present embodiment is adapted to the electronic device 30 of FIG. 3, and detailed steps of the data copy method of the data transmitting end of the invention are described below with reference of various components in the electronic device 30. Namely, in the present embodiment, the electronic device 30 serves as the data transmitting end to copy data to the electronic device 40.

In step S410, the data copy module 341 receives a copy instruction associated with specific data, and adds the specific data to a clipboard of the electronic device 30. In detail, when the user selects the specific data and sends the copy instruction to the specific data, the data copy module 341 stores the specific data selected by the user into the clipboard database 347 of the electronic device 30 according to the copy instruction. For example, after the electronic device 30 displays an image, the user can perform a predetermined touch gesture (for example, a touch gesture of double click, drag or long press, etc.) to activate the electronic device 30 to provide a copy option for copying the image, such that the user can click to select the copy option to send the copy instruction. However, the invention is not limited thereto, and those skilled in the art can determined the user interface provided to the user for sending the copy instruction according to an actual application.

Moreover, the selection method of the data to be copied is not limited by the invention. In another embodiment, the electronic device 30 can add the data to the clipboard of the electronic device 30 based on trigger of another event. For example, the data copy module 341 can automatically add data or file complied with a setting condition to the clipboard of the electronic device 30, such as the data current used, previewed or edited by the user.

Then, in step S420, when detecting that the data is added to the clipboard of the electronic device 30, the data copy module 341 captures the data and translates the data into at least one data packet complied with a transmission specification of the network unit 310 or the first priority transmission unit 321 and the second priority transmission unit 422 belonging to the wireless transmission unit. In this way, the electronic device 30 can transmit data through different data transmission interfaces and signal transmission methods. For example, the data copy module 341 can reorganize the data in the clipboard into a packet pattern complied with a bluetooth transmission specification or an audio transmission specification. Alternatively, the data copy module 341 can reorganize the data into a packet pattern complied with a 3G transmission specification or a WiFi transmission specification. In brief, the data copy module 341 can translate the data into the corresponding packet pattern according to the type of the data transmission device of the electronic device 30.

In step S430, the transmission path selection module 342 determines whether the electronic device 30 is connected to the network 60 associated to the network unit 30. In the present embodiment, if the electronic device 30 is connected to the network 60 through the network unit 310, the data corresponding to the copy instruction is uploaded to a cloud service platform through the network 60, and the cloud service platform transfers the data uploaded by the electronic device 30 to the electronic device 40. On the other hand, if the electronic device 30 cannot be connected to the network 60 through the network unit 310, the transmission path selection module 342 can further detect and determine the wireless transmission unit on the electronic device 30 that has a data transmission function, so as to transmit the data corresponding to the copy instruction to the electronic device 40 through a short distance data transmission interface.

Further, if the electronic device 30 is connected to the network 60, in step S440, the second transmission module 344 logs in the server 50 by using identification information. Then, in step S450, the second transmission module 344 transmits the data corresponding to the copy instruction to the server 50 through the network unit 310, and the server 50 transmits the data to the electronic device 40 corresponding to the same identification information. In detail, the electronic device 40 is also connected to the network 60 through the network unit 410, and logs in the server 50 by using the same identification information as well, and the data receiving module 445 of the electronic device 40 receives the data corresponding to the copy command from the server 50 by using the network unit 410. Further, the data receiving module 445 of the electronic device 40 keeps detecting whether there is data and event notification transmitted by the server 50 by using the network unit 410, so as to receive the data transmitted by the electronic device 30.

If the electronic device 30 is not connected to the network 60, in step S460, the first transmission module 343 determines whether the first priority transmission unit 321 belonging to the wireless transmission unit is in an available state. It should be noticed that the first transmission module 343 can determine whether the first priority transmission unit 321 is in the available state according to a current working state of the first priority transmission unit 321, a data transmission speed or a signal transmission quality, etc., though the invention is not limited thereto. Here, the first transmission module 343 first determines whether the first priority transmission unit 321 can be used to transmit the data to the electronic device 40. If the first priority transmission unit 321 is in the available state, in step S470, the first transmission module 343 establishes a proximity-based wireless connection with another electronic device by using the first priority transmission unit 321, and directly transmits the data to the another electronic device through the proximity-based wireless connection.

In one of the embodiments, the first transmission unit 343 determines whether the bluetooth communication module of the electronic device 30 is in a normal working state. If the bluetooth communication module of the electronic device 30 is in the normal working state, the first transmission module 343 establishes a bluetooth communication connection between the bluetooth communication module belonging to the first priority transmission unit 421 and the first priority transmission unit 421 of the electronic device 40, such that the first priority transmission unit 421 of the electronic device 40 receives the data corresponding to the copy instruction through the bluetooth communication connection established between the electronic device 30 and the electronic device 40.

If the first priority transmission unit 321 is not in the available state, in step S480, the first transmission module 343 directly transmits the data to the electronic device 40 by using the second priority transmission unit 322 belonging to the wireless transmission unit. In one of the embodiments, when the electronic device 30 cannot establish the bluetooth communication connection with the electronic device 40 through the bluetooth communication module, the first transmission module 343 automatically changes to transmit the data corresponding to the copy instruction through an audio transmission method applying the microphone and speaker, and uses the speaker in the second priority transmission unit 322 to transmit the data added to the clipboard database 347. In this way, the data receiving module 445 of the electronic device 40 can use the microphone in the second priority transmission unit 422 to receive the data transmitted by the electronic device 30. According to the above description, it is known that the electronic device 30 can determine the data transmission device used for transmitting the data corresponding to the copy instruction according to a network connection state thereof and a working state of the data transmission device. In this way, the data corresponding to the copy instruction can be flexibly and quickly transmitted to the electronic device 40, and the user can edit or use the data corresponding to the copy instruction in real-time by using the electronic device 40.

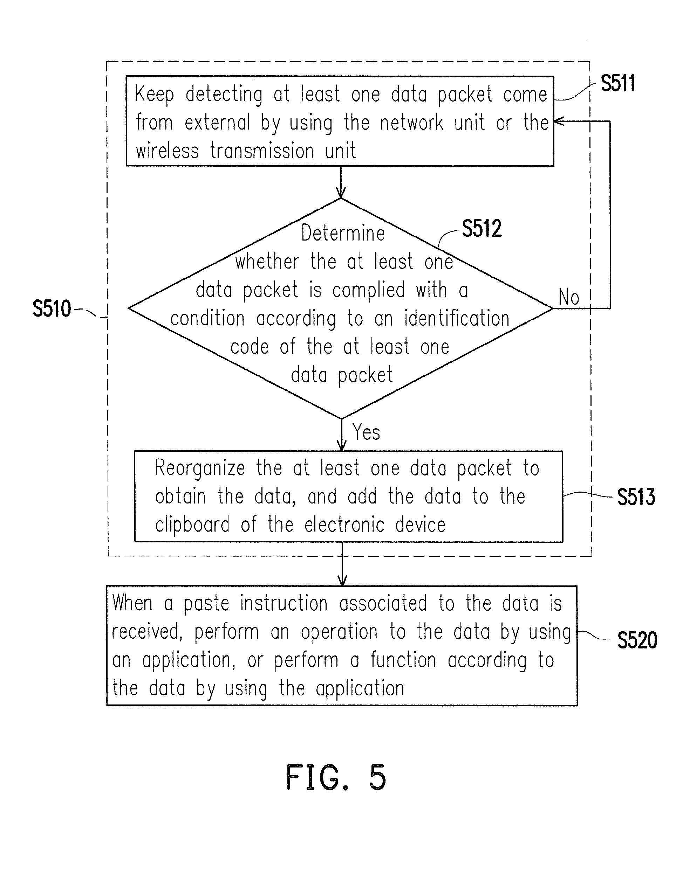

FIG. 5 is a flowchart illustrating a data copy method of a data receiving end according to an embodiment of the invention. Referring to FIG. 3 and FIG. 5, the method of the present embodiment is adapted to the electronic device 40 of FIG. 3, and detailed steps of the data copy method of the data receiving end of the invention are described below with reference of various components in the electronic device 40. Namely, in the present embodiment, the electronic device 40 serves as the data receiving end to receive the data copied by the electronic device 40.

In the present embodiment, it is assumed that the electronic device 30 has transmitted the data corresponding to the copy instruction, in step S510, the data receiving module 445 receives the data through the network unit 410 or the wireless transmission unit including the first priority transmission unit 421 and the second priority transmission unit 422, and adds the data to the clipboard database 447 of the electronic device 40. In detail, the step S510 can be implemented by sub step S511 to stepS513. First, in the step S511, the data receiving module 445 keeps detecting at least one data packet come from external by using the network unit 410, the first priority transmission unit 421 or the second priority transmission unit 422, wherein the first priority transmission unit 421 or the second priority transmission unit 422 are belonging to the wireless transmission unit.

In brief, the electronic device 30 and the electronic device 40 use the hardware devices of the same type to transmit and receive the data corresponding to the copy instruction. When the electronic device 30 uses the network unit 310 to transmit the data corresponding to the copy instruction, the electronic device 40 receives the data corresponding to the copy instruction by using the network unit 410. When the electronic device 30 uses the first priority transmission unit 321 to transmit the data corresponding to the copy instruction, the electronic device 40 receives the data corresponding to the copy instruction by using the first priority transmission unit 421. When the electronic device 30 uses the second priority transmission unit 322 to transmit the data corresponding to the copy instruction, the electronic device 40 receives the data corresponding to the copy instruction by using the second priority transmission unit 422.

In step S512, the data receiving module 445 determines whether the at least one data packet is complied with a condition according to an identification code of the at least one data packet. In the present embodiment, the electronic device 40 may receive data packets from everywhere through the network unit 410, the first priority transmission unit 421 and the second priority transmission unit 422, and the data receiving module 445 can identify whether the received data packet is transmitted by the electronic device 30 and includes the data corresponding to the copy instruction according to the identification code in the data packet. For example, the data receiving module 445 can identify the data packet according to the identification code of the data packet and a table lookup method, though the invention is not limited thereto.

In step S513, the data receiving module 445 reorganizes the at least one data packet to obtain the data, and adds the data to the clipboard of the electronic device 40. Further, the data receiving module 445 reorganizes and translates the data packets transmitted by the electronic device 30 to obtain the data corresponding to the copy instruction. Then, in step S520, when the data paste module 446 receives a paste instruction associated with the data, the data paste module 446 performs an operation to the data by using an application, or performs a function according to the data by using the application.

It should be noticed that a situation that the electronic device 30 transmits the data corresponding to the copy instruction to the electronic device 40 is taken as an example for description. However, in another embodiment, the electronic device 40 can also copy and transmit the data added to the clipboard database 447 to the clipboard database 347 of the electronic device 30 according to the same or similar method.

In summary, in the data copy method between electronic devices of the invention, the electronic device determines to use the network unit or the proximity-based wireless transmission unit to transmit data copied by the user according to a network connection state. If the electronic device is not connected to the network, the electronic device directly transmits the data through the proximity-based wireless transmission unit. Comparatively, if the electronic device is connected to the network, the electronic device indirectly transmits the data through the network unit via the sever in the network. In this way, the application situation of data copy between electronic devices is not limited by the network environment, such that data copy between electronic devices can be completed efficiently and meets user's actual requirement, and usage convenience of the electronic device is improved. Besides, an application range of data copy between electronic devices is expanded, and information sharing efficiency and feasibility of editing and using the same data on different electronic devices are enhanced.

## Claims

1. A data copy method between electronic devices, adapted to an electronic device (10, 30, 40), wherein the electronic device (10, 30, 40) comprises a network unit (110, 310, 410) and a wireless transmission unit (120), the data copy method between electronic devices (10, 30, 40) comprising:
adding (S210) data to a clipboard of the electronic device (10, 30, 40);
determining (S220, S430) whether the electronic device (10, 30, 40) is connected to a network (60) associated to the network unit (110, 310, 410), so as to determine to use the network unit (110, 310, 410) or the wireless transmission unit (120) to transmit the data;
directly transmitting (S230) the data to another electronic device (10, 30, 40) through the wireless transmission unit (120) when the electronic device (10, 30, 40) is not connected to the network (60), such that the data is added to another clipboard of the another electronic device (10, 30, 40); and
indirectly transmitting (S240) the data to the another electronic device (10, 30, 40) through the network unit (110, 310, 410) via a sever (50) in the network (60) when the electronic device (10, 30, 40) is connected to the network (60), such that the data is added to the another clipboard of the another electronic device (10, 30, 40).

2. The data copy method between electronic devices as claimed in claim 1, wherein the step (S210) of adding the data to the clipboard of the electronic device (10, 30, 40) comprises:
receiving (S410) a copy instruction associated with the data, and accordingly adding the data to the clipboard of the electronic device (10, 30, 40); and
capturing (S420) the data and translating the data into at least one data packet complied with a transmission specification of the network unit (110, 310, 410) or the wireless transmission unit (120) when detecting that the data is added to the clipboard.

3. The data copy method between electronic devices as claimed in claim 1, further comprising:
receiving (S250, S510) another data through the network unit (110, 310, 410) or the wireless transmission unit (120), and adding the another data to the clipboard of the electronic device (10, 30, 40); and
performing (S260, S520) an operation to the another data by using an application, or performing a function according to the another data by using another application when a paste instruction associated with the another data is received.

4. The data copy method between electronic devices as claimed in claim 3, wherein the step (S250, S510) of receiving the another data through the network unit or the wireless transmission unit (120), and adding the another data to the clipboard of the electronic device (10, 30, 40) comprises:
using (S511) the network unit (110, 310, 410) or the wireless transmission unit (120) to keep detecting at least one data packet come from external; and
determining (S512) whether the at least one data packet is complied with a condition according to an identification code of the at least one data packet, and if yes, reorganizing (S513) the at least one packet to obtain the another data, and adding the another data to the clipboard of the electronic device.

5. The data copy method between electronic devices as claimed in claim 1, wherein the step (S230) of directly transmitting the data to the another electronic device (10, 30, 40) through the wireless transmission unit (120) when the electronic device (10, 30, 40) is not connected to the network (60), such that the data is added to another clipboard of the another electronic device (10, 30, 40) comprises:
determining (S460) whether a first priority transmission unit (321, 421) belonging to the wireless transmission unit (120) is in an available state;
using (S470) the first priority transmission unit (321, 421) to establish a proximity-based wireless connection with the another electronic device (10, 30, 40) when the first priority transmission unit (321, 421) is in the available state, and directly transmitting the data to the another electronic device (10, 30, 40) through the proximity-based wireless connection; and
using a second priority transmission unit (322, 422) belonging to the wireless transmission unit (120) to directly transmit the data to the another electronic device (10, 30, 40) when the first priority transmission unit (321, 421) is not in the available state.

6. The data copy method between electronic devices as claimed in claim 1, wherein the step (S240) of indirectly transmitting the data to the another electronic device (10, 30, 40) through the network unit (110, 310, 410) via a sever (50) in the network (60) when the electronic device (10, 30, 40) is connected to the network (60), such that the data is added to the another clipboard of the another electronic device (10, 30, 40) comprises:
logging (S440) in the server (50) by using identification information; and
transmitting (S450) the data to the server (50) through the network unit (110, 310, 410), such that the server (50) transmits the data to the another electronic device (10, 30, 40) corresponding to the same identification information.

7. An electronic device (10, 30, 40), comprising:
a network unit (110, 310, 410);
a wireless transmission unit (120);
a storage unit (140, 340, 440), storing a plurality of modules; and
one or a plurality of processing units (130, 330, 430), coupled to the network unit (110, 310, 410), the wireless transmission unit (120) and the storage unit (130, 330, 430), and accessing and executing the modules stored in the storage unit (140, 340, 440), wherein the modules comprise:
a data copy module (141, 341, 441), adding data to a clipboard of the electronic device (10, 30,40);
a transmission path selection module (142, 342, 442), determining whether the electronic device (10, 30, 40) is connected to a network (60) associated to the network unit (110, 310, 410), so as to determine to use the network unit (110, 310, 410) or the wireless transmission unit (120) to transmit the data;
a first transmission module (143, 343, 443), directly transmitting the data to another electronic device (10, 30, 40) through the wireless transmission unit (120) when the electronic device (10, 30, 40) is not connected to the network (60), such that the data is added to another clipboard of the another electronic device (10, 30, 40); and
a second transmission module (144, 344, 444), indirectly transmitting the data to the another electronic device (10, 30, 40) through the network unit (110, 310, 410) via a sever (50) in the network (60) when the electronic device (10, 30, 40) is connected to the network (60), such that the data is added to the another clipboard of the another electronic device (10, 30, 40).

8. The electronic device as claimed in claim 7, wherein the data copy module (141, 341, 441) receives a copy instruction associated with the data, and accordingly adds the data to the clipboard of the electronic device (10, 30, 40),
wherein the data copy module (141, 341, 441) captures the data and translates the data into at least one data packet complied with a transmission specification of the network unit (110, 310, 410) or the wireless transmission unit (120) when the data copy module (141, 341, 441) detects that the data is added to the clipboard.

9. The electronic device as claimed in claim 7, wherein the modules further comprise:
a data receiving module (145, 345, 445), receiving another data through the network unit (110, 310, 410) or the wireless transmission unit (120), and adding the another data to the clipboard of the electronic device (10, 30, 40); and
a data paste module (146, 346, 446), performing an operation to the another data by using an application, or performing a function according to the another data by using another application when the data paste module (146, 346, 446) receives a paste instruction associated with the another data.

10. The electronic device as claimed in claim 9, wherein the data receiving module (145, 345, 445) uses the network unit (110, 310, 410) or the wireless transmission unit (120) to keep detecting at least one data packet come from external,
wherein the data receiving module (145, 345, 445) determines whether the at least one data packet is complied with a condition according to an identification code of the at least one data packet, and if yes, the data receiving module (145, 345, 445) reorganizes the at least one packet to obtain the another data, and adds the another data to the clipboard of the electronic device (10, 30, 40).

11. The electronic device as claimed in claim 7, wherein the first transmission module (143, 343, 443) determines whether a first priority transmission unit (321, 421) belonging to the wireless transmission unit (120) is in an available state,
wherein, when the first priority transmission unit (321, 421) is in the available state, the first transmission module (143, 343, 443) uses the first priority transmission unit (321, 421) to establish a proximity-based wireless connection with the another electronic device (10, 30, 40), and directly transmits the data to the another electronic device (10, 30, 40) through the proximity-based wireless connection,
wherein, when the first priority transmission unit (321, 421) is not in the available state, the first transmission module (143, 343, 443) uses a second priority transmission unit (322, 422) belonging to the wireless transmission unit (120) to directly transmit the data to the another electronic device (10, 30, 40).

12. The electronic device as claimed in claim 7, wherein the second transmission module (144, 344, 444) logs in the server (50) by using identification information, and transmits the data to the server (50) through the network unit (110, 310, 410), such that the server (50) transmits the data to the another electronic device (10, 30, 40) corresponding to the same identification information.
